# EUROPEAN PATENT APPLICATION

(11) **EP 1 961 588 A1**
(43) Date of publication of application: **27.08.2008**
(21) Application number: 06823500.1
(22) Date of filing: 22.11.2006
(51) Int. Cl.: B60C 23/04, B60C 19/00, G01L 17/00

(54) **ELECTRONIC APPARATUS INSTALLATION STRUCTURE AND PNEUMATIC TIRE**

(30) Priority: 12.12.2005 JP 2005358006
(71) Applicant: Bridgestone Corporation, Tokyo 104-8340 (JP)
(72) Inventor: UTSUMI, Atsuo c/o Bridgestone Corporation Technical Center, Kodaira-shi, Tokyo 187-8531 (JP); WATANABE, Yoichi c/o Bridgestone Corporation Technical Center, Kodaira-shi, Tokyo 187-8531 (JP); FURUKAWA, Makoto c/o Bridgestone Corporation Technical Center, Kodaira-shi, Tokyo 187-8531 (JP); ICHIKAWA, Yoshihiko c/o Bridgestone Corporation Technical Center, Kodaira-shi, Tokyo 187-8531 (JP)
(74) Representative: Whalley, Kevin
(86) International application number: PCT/JP2006/323273
(87) International publication number: WO 2007/069434

(57) **Abstract**

A electronic device is mounted on a circumferential surface of an inner liner by tucking first, second and third edges of a device plate between a first holding plane of a first guide tab and a surface of a holder plate, between a second holding plane of a second guide tab and the surface of the holder plate, and between a third holding plane of a third guide tab and the surface of the holder plate. The electronic device can be stably-mounted over the long term without difficulty and can be removed from the circumferential surface of the inner liner without difficulty.

## Description

### TECHNICAL FIELD

The present inventions relate to a mounting structure of an electronic device for attaching the electronic device such as a transponder and an inner pressure monitoring device on an inner liner of a pneumatic tire, and to a pneumatic tire on which the electronic device is attached with the mounting structure of an electronic device.

### BACKGROUND ART

A Patent Document 1 shows a prior art of a mounting structure of an electronic device for mounting the electronic device such as a transponder on an inner liner of a pneumatic tire. A specific structure according to this prior art of a mounting structure of an electronic device will be explained hereinbelow.

Specifically, a rubber base (a rubber ply (130) in the Patent Document 1) is fixed on the inner liner. A mounting shaft (a shaft (152) in the Patent Document 1) is integrally provided on the center of the rubber base. A mounting head (a head of the shaft (152) in the Patent Document 1) is integrally provided at the distal end of the mounting shaft. Note that a shape (a cross-sectional shape) of the mounting head is larger than a cross-sectional shape of the mounting shaft.

In the electronic device (a module (E) in the Patent Document 1), an insertion hole (an opening (124) in the Patent Document 1) is formed. This insertion hole has a similar shape to that of the mounting head in order that the mounting head is inserted therethrough. In addition, an elongate hole (a transfer slot (124a) in the Patent Document 1) extending to a direction perpendicular to the insertion hole is formed on the center part of the electronic device. One end of the elongate hole leads to the insertion hole. Here, The center part of the electronic device is configured to integrally fit with the mounting shaft due to a pressure exerted between an inner circumferential surface of another end of the elongate hole and an outer circumferential surface of the mounting shaft.

Specifically, the electronic device is brought close to the rubber base fixed on the inner liner to insert the mounting head into the insertion hole. Next, the electronic device is rotated 90-degree relative to the rubber base with the mounting shaft being inserted within the insertion hole. And then the electronic device is moved to a longitudinal direction of the elongated hole with the mounting shaft being guided with the elongated hole. As a result, the center portion of the electronic device is integrally fitted with the mounting shaft due to the contact pressure exerted between the inner circumferential surface of the other end of the elongate hole and the outer circumferential surface of the mounting shaft. According to this, the electronic device can be mounted on the inner liner.

On the other hand, inverse processes are taken in case where the electronic device is to be repaired, exchanged and so on. According to this, the electronic device can be removed from the inner liner.
Patent Document 1: Japanese Translation of PCT International Application Laid-Open NO. 2002-541003

### DISCLOSURE OF THE INVENTION

However, in the mounting structure of an electronic device according to the prior art, the electronic device is mounted on the inner liner by the center portion of the electronic device integrally being fitted with the mounting shaft due to the contact pressure exerted between the inner circumferential surface of the other end of the elongate hole and the outer circumferential surface of the mounting shaft. Therefore, the electronic device may be easy to rattle due to various input forces (external forces) during the pneumatic tire spinning, thereby it is difficult to keep the electronic device stably-mounted over the long term.

On the other hand, it can be adopted that strengthen is the contact pressure exerted between the inner circumferential surface of the other end of the elongate hole and the outer circumferential surface of the mounting shaft by stiffly-connecting the elongated hole and the mounting shaft in order to suppress the electronic device rattling during the pneumatic tire spinning. However, in this case, the electronic device is hard to be removed from the inner liner, thereby the repairing or changing operation of the electronic device becomes cumbersome.

Therefore, it is an object of the present inventions to provide a newly-configured mounting structure of an electronic device and a pneumatic tire with the newly-configured mounting structure of an electronic device for solving the above-mentioned issue.

The present invention is a mounting structure of an electronic device, in which the electronic device provided with a device plate composed of a rigid material at its bottom is mounted on an inner liner of a pneumatic tire. The mounting structure of the electronic device includes a holder plate which is composed of a rigid material and fixed on a surface of the inner liner directly or indirectly, a first guide tab which is integrally provided with the device plate and has a first holding plane on its inward side for tucking a first edge of the device plate in combination with a surface of the holder plate to hold the first edge slidably in a prescribed direction and in an opposed direction to prescribed direction, and a second guide tab which is integrally provided with the device plate and has a second holding plane on its inward side for tucking a second edge of the device plate, which is parallel to the first edge of the device plate, in combination with the surface of the holder plate to hold the second edge slidably in the prescribed direction and in the opposed direction. In addition, an insertion space into which the device plate is inserted is sectioned by the surface of the holder plate, the first holding plane and the second holding plane. The mounting structure of an electronic device further comprises a first movement restraint means for restricting a movement of the device plate being inserted within the insertion space beyond a predetermined set position toward the prescribed direction, and a second movement restraint means which can be transformed between a restraint mode for restricting a movement of the device plate had been set in the predetermined set position toward the opposed direction and a release mode for releasing the restraint mode.

Here, the above phrase "provided with the device plate" includes both cases that the device plate is provided at the bottom of the electronic device as one component of the electronic device and that the device plate is provided at the bottom of the electronic device as one separated part from the electronic device. In addition, the above phrase "fixed on a surface of the inner liner directly or indirectly" includes both cases of being provided on the surface of the inner liner directly and being provided on the surface of the inner liner indirectly via a rubber base. Further, the above phrase "integrally provided" includes integral forming.

The first and second edges of the device plate are held by the first holding plane of the first guide tab and the second holding plane of the second guide tab when the device plate has been inserted into the insertion space. And then, when the device plate is slid in the prescribed direction, the movement of the device plate beyond the predetermined set position is restrained by the first movement restraint means. Therefore, the device plate can be set in the predetermined set position. In addition, the movement in the opposed direction of the device plate had been set in the predetermined set position is restrained by the second movement restraint means.

According to this, the electronic device can be mounted on the inner liner by tucking the first and second edges of the device plate between the first holding plane of the first guide tab and the surface of the holder plate, and between the second holding plane of the second guide tab and the surface of the holder plate. Therefore, rattling of the electronic device due to various input forces during spinning of the pneumatic tire can be restrained sufficiently without strengthening contact pressures exerted between the first holding plane of the first guide tab and the first edge of the device plate, and between the second holding plane of the second guide tab and the second edge of the device plate.

On the other hand, the device plate is moved in the opposed direction by transforming the second movement restraint means from the restraint mode to the release mode. According to this, the device plate is removed from the insertion space, thereby the electronic device is unmoundted from the inner liner.

Here, it is preferable that the first movement restraint means is integrally formed on the holder plate as a third guide tab having a third holding plane on its inward side for tucking a third edge of the device plate perpendicular to the first edge of the device plate.

The electronic device can be mounted on the inner liner by tucking the first, second and third edges of the device plate between the first holding plane of the first guide tab and the surface of the holder plate, between the second holding plane of the second guide tab and the surface of the holder plate, and between the third holding plane of the third guide tab and the surface of the holder plate.

In addition, it is preferable that the second movement restraint means is integrally formed on the holder plate or the device plate as a stopper capable of being transformed by its elastic deformation between the restraint mode and the release mode.

Further, it is preferable that the first and second guide tabs extend a tire lateral direction, respectively. Since the first and second guide tabs extend a tire lateral direction, rattling of the electronic device, especially due to input forces at stop-spinning (speed-reducing) and start-spinning (speed-accelerating) of the pneumatic tire among the various input forces, can be restrained sufficiently.

And, the present invention is a mounting structure of an electronic device in which the electronic device provided with a circular device plate composed of rigid material at its bottom is mounted on an inner liner of a pneumatic tire. The mounting structure of the electronic device includes a holder plate which is composed of a rigid material and fixed on a surface of the inner liner directly or indirectly, and guide tabs each of which is integrally provided along a circumference direction of the device plate at intervals and has a holding plane on its inward side for tucking one of arch-shaped flanges projecting outward from a circumference of the device plate in combination with a surface of the holder plate. An insertion space into which the device plate is inserted is sectioned by the surface of the holder plate and the holding planes. The mounting structure of an electronic device further comprises a first rotation restraint means for restricting a rotation of the device plate being inserted within the insertion space beyond a predetermined set position toward a prescribed rotational direction, and a second rotation restraint means which can be transformed between a restraint mode for restricting a rotation of the device plate had been set in the predetermined set position toward an opposed direction to the rotational direction and a release mode for releasing the restraint mode.

Here, the above phrase "provided with the device plate" includes both cases that the device plate is provided at the bottom of the electronic device as one component of the electronic device and that the device plate is provided at the bottom of the electronic device as one separated part from the electronic device. In addition, the above phrase "fixed on a surface of the inner liner directly or indirectly" includes both cases of being provided on the surface of the inner liner directly and being provided on the surface of the inner liner indirectly via a rubber base. Further, the above phrase "integrally provided" includes integral forming.

The device plate is inserted into the insertion space from above. At this time, the guide tabs and the flanges are aligned not to be overlapped each other and then an upper plane of the holder plate and a lower plane of the device plate are contacted. Subsequently, the device plate is rotated in the rotational direction and then the rotation of the device plate in the rotational direction beyond the predetermined set position is restrained by the first rotation restraint means. Therefore, the device plate can be set in the predetermined set position. In addition, the rotation in the opposed direction of the device plate had been set in the predetermined set position is restrained by the second rotation restraint means.

According to this, the electronic device can be mounted on the inner liner by tucking the flanges of the device plate between the holding planes of the guide tabs and the surface of the holder plate. Therefore, rattling of the electronic device due to various input forces during spinning of the pneumatic tire can be restrained sufficiently without strengthening contact pressures exerted between the first holding plane of the first guide tab and the first edge of the device plate, and between the second holding plane of the second guide tab and the second edge of the device plate.

On the other hand, the device plate is rotated in the opposed direction by transforming the second rotation restraint means from the restraint mode to the release mode. According to this, a holding state by the holding planes of the guide tabs is released. And then the device plate is removed upward from the holder plate. According to this, the device plate is removed from the insertion space, thereby the electronic device is unmoundted from the inner liner.

Here, it is preferable that the first movement restraint means is integrally formed on the holder plate as a wall contacting with one of the flanges when the device plate inserted within the insertion space is rotated in the rotational direction.

In addition, it is preferable that the second movement restraint means is integrally formed on the holder plate or the device plate as a stopper capable of being transformed by its elastic deformation between the restraint mode and the release mode.

Further, it is preferable that two of the guide tabs extend a tire lateral direction opposingly. Since the two of the guide tabs extend the tire lateral direction opposingly, rattling of the electronic device, especially due to input forces at stop-spinning (speed-reducing) and start-spinning (speed-accelerating) of the pneumatic tire among the various input forces, can be restrained sufficiently.

Note that it is preferable that the mounting structure of an electronic device further comprises a rubber base adhered on the surface of the inner liner and the holder plate is adhered on a surface of the rubber base.

In addition, it is preferable that, at vulcanizing a raw tire, the rubber base is vulcanization-adhered on the surface of the inner liner and a back surface of the holder plate is vulcanization-adhered on the surface of the rubber base.

In addition, it is preferable that the rigid material is light alloy metal.

### BRIEF DESCRIPTION OF THE DRAWINGS

**[****Fig. 1]** Fig. 1 is a perspective view of a mounting structure of an electronic device according to a first embodiment with a transponder removed.
**[****Fig. 2]** Fig. 2 is a perspective view of the mounting structure of an electronic device according to the first embodiment with the transponder mounted.
**[****Fig. 3]** Fig. 3 is a diagram showing the mounting structure of an electronic device according to the first embodiment with the transponder mounted, which is viewed from a lateral direction of a tire.
**[****Fig. 4]** Fig. 4 is a cross-sectional view of the mounting structure of an electronic device according to the first embodiment with the transponder removed.
**[****Fig. 5]** Fig. 5 is a partial cross-sectional view of the pneumatic tire according to the first embodiment.
**[****Fig. 6]** Fig. 6 is a perspective view of a mounting structure of an electronic device according to a second embodiment with a transponder removed.
**[****Fig. 7]** Fig. 7 is a diagram showing a state where the transponder is being mounted on a circumferential surface of an inner liner with the mounting structure of an electronic device according to the second embodiment.
**[****Fig. 8]** Fig. 8 is a perspective view of the mounting structure of an electronic device according to the second embodiment with the transponder mounted.
**[****Fig. 9]** Fig. 9 is an enlarged diagram of a pointed area IX in Fig. 6.
**[****Fig. 10]** Fig. 10 is a cross-sectional view of the mounting structure of an electronic device according to the second embodiment with the transponder removed.
**[****Fig. 11]** Fig. 11 is a partial cross-sectional view of the pneumatic tire according to the second embodiment.

### BEST MODE(S) FOR CARRYING OUT THE INVENTION

### (First Embodiment)

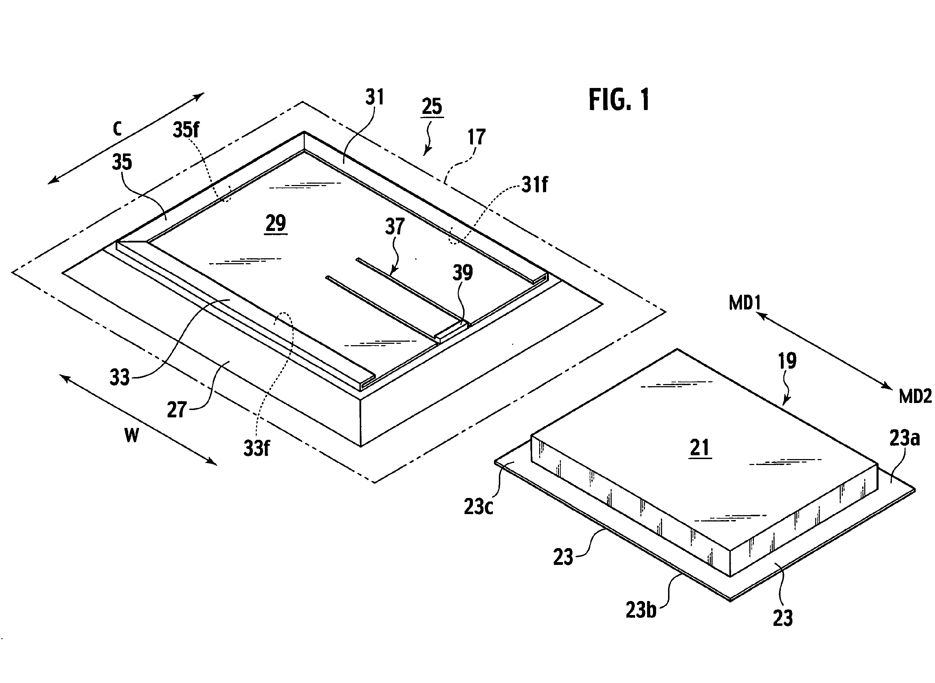

A first embodiment according to the present invention will be explained with reference to Figs. 1 to 5.

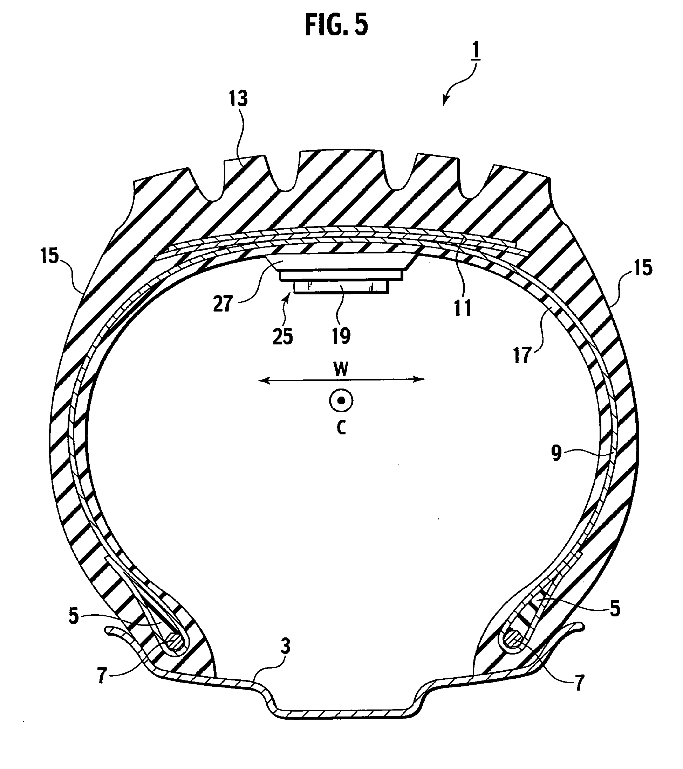

As shown in Fig. 5, a pneumatic tire 1 in the first embodiment can be filled with air as working gas and has a pair of annular bead fillers 5 capable of being tightly seated on a rim 3. A bead core 7 is mounted within each of the bead fillers 5. In addition, a carcass 9 is integrally provided between the pair of bead fillers 5 as a structural member. This carcass 9 has a troidal cross-sectional shape. Further, a multiply belt 11 is integrated on an outer circumferential surface of the carcass 9.

A tread 13 surrounding the belt 11 is integrally provided on the outer circumferential surface of the carcass 9. Sidewalls 15 for protecting the carcass 9 are integrally provided on outer side surfaces of the carcass 9. In addition, an inner liner 17 for preventing air permeation is also integrally provided on an inner surface (incl. an inner circumferential surface).

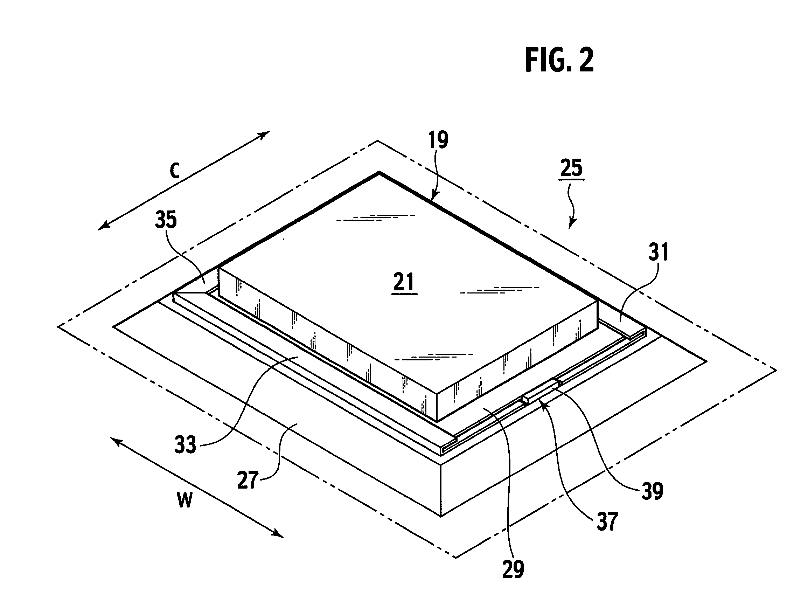

As shown in Figs. 1 and 2, a transponder 19 is mounted on an inner circumferential surface of the inner liner 17. This transponder 19 is one of electronic devices and equipped to monitor an inner pressure and inner temperature of the tire. In addition, the transponder 19 includes a box-shaped electronic device main body 21 that incorporates various electronic components (not shown). A rectangular device plate 23 is provided at a bottom of the electronic device main body 21, which is composed of light alloy metal such as aluminum (one of rigid materials). Note that, in the present embodiment, the device plate 23 is provided at the bottom of the transponder 19 as one component of the transponder 19, however a device plate may be provided at the bottom of the transponder 19 as one separated component.

Next, a mounting structure 25 for mounting the transponder 19 on the circumferential surface of the inner liner 17 will be explained.

As shown in Figs. 1 to 4, a rubber base 27 is adhered on the circumferential surface of the inner liner 17. A holder plate 29 is adhered on a surface of the rubber base 27. In other words, the holder plate 29 is indirectly-fixed on the circumferential surface of the inner liner 17 via the rubber base 27. Specifically, at vulcanizing a raw tire (a tire which has not yet completed as the pneumatic tire 1), the rubber base 27 is vulcanization-adhered on the circumferential surface of the inner liner 17 and a back surface of the holder plate 29 is vulcanization-adhered on the surface of the rubber base 27. Note that the holder plate 29 may be directly-fixed on the circumferential surface of the inner liner 17 instead of being indirectly-fixed on the circumferential surface of the inner liner 17 via the rubber base 27.

A first guide tab 31 extending in a tire lateral direction W is integrally formed by bending processes at one end in a tire circumferential direction C of the holder plate 29. The first guide tab 31 has a first holding plane 31f on its inward side for tucking a first edge 23a of the device plate 23 in combination with the surface of the holder plate 29. The first edge 23a of the device plate 23 is held slidably in prescribed linier directions MD1 and MD2 (extending directions of the first guide tab 31) by the first holding plane 31f (and the surface of the holder plate 29). The directions MD1 and MD2 are opposite each other. Note that the first guide tab 31 may be formed by grinding processes with a monoblock material or by being integrally welded onto the holder plate 29 instead of being integrally formed by bending work of the holder plate 29.

A second guide tab 33 extending in the tire lateral direction W is integrally formed by bending processes at another end in the tire circumferential direction C of the holder plate 29. The second guide tab 33 has a second holding plane 33f on its inward side for tucking a second edge 23b, which is parallel to the first edge 23a, of the device plate 23 in combination with the surface of the holder plate 29. The second edge 23b of the device plate 23 is held slidably in the prescribed linier directions MD1 and MD2 (extending directions of the second guide tab 33) by the second holding plane 33f (and the surface of the holder plate 29). Note that the second guide tab 33 may be formed by being integrally welded onto the holder plate 29 instead of being integrally formed by bending work of the holder plate 29.

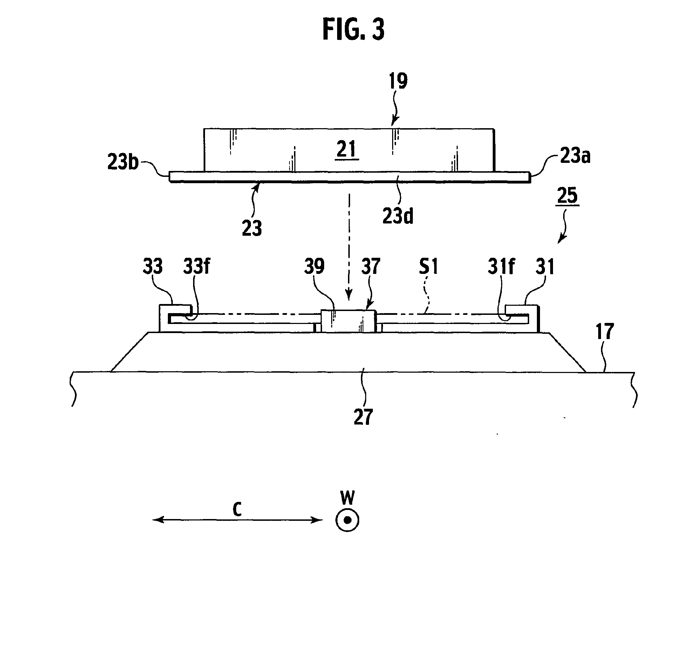

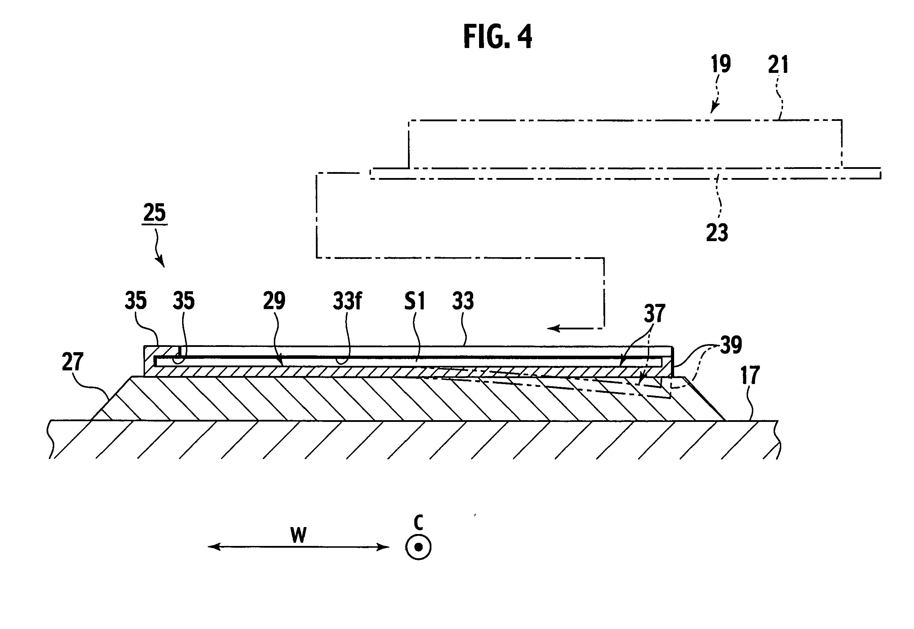

And, as shown in Figs. 3 and 4, an insertion space S1 into which the device plate 23 can be inserted is sectioned by the surface of the holder plate 29, the first holding plane 31f of the first guide tab 31 and the second holding plane 33f of the second guide tab 33.

As shown in Figs. 1, 2 and 4, a third guide tab (a first movement restraint means) 35 is integrally formed by bending processes at a back end of the insertion space S1 of the holder plate 29 in order to restrict a movement of the device plate 23 being inserted within the insertion space S1 beyond a predetermined set position (a position of the device plate 23 shown in Fig. 2) toward the direction MD1. The third guide tab 35 has a third holding plane 35f on its inward side for tucking a third edge 23c, which is perpendicular to the first edge 23a, of the device plate 23 in combination with the surface of the holder plate 29. Note that the third guide tab 35 may be formed by grinding processes with a monoblock material or by being integrally welded onto the holder plate 29 instead of being integrally formed by bending works of the holder plate 29. In addition, the first movement restraint means may be integrally formed on the holder plate as a wall capable of contacting with the device plate 29 that has been inserted within the insertion space S1 and then moved in the direction MD1 instead of being integrally formed by bending works of the holder plate 29.

On the other hand, a strip-shaped stopper (a snap tab: a second movement restraint means) 37 is integrally formed on the holder plate 29 by slitting works in order to restrict a movement of the device plate 23 had been set in the predetermined set position toward the direction MD2. The stopper 37 has a pawl 39 capable of contacting with a fourth edge 23d of the device plate 23, which is parallel to the third edge 23c. In addition, the stopper 37 can transform its state between a restraint mode by the pawl (shown by solid lines in Fig. 4) and a release mode of the pawl (shown by dotted lines in Fig. 4). The restraint mode is a mode in which the movement of the device plate 23 in the direction MD2 is restrained by projecting the pawl 39 from the surface of the holder plate 29 by an elastic deformation of the stopper 37 (a state of the stopper 37 shown by solid lines in Fig. 4). The release mode is a mode in which the restraint mode is cancelled by retracting the pawl 39 beneath the surface of the holder plate 29 (a state of the stopper 37 shown by dotted lines in Fig. 4). Further, as shown in Fig. 4, it is preferable that the stopper 37 impels the device plate 23 toward the third guide tab 35 by its elastic force. Note that the stopper 37 may be integrally formed on the device plate 23 instead of being integrally formed on the holder plate 29. The number of the stoppers 37 can be increased arbitrarily.

Next, workings and advantages of the first embodiment will be explained.

The first edge 23a, the second edge 23b and the third edge 23c of the device plate 23 can be held by the first holding plane 31f of the first guide tab 31, the second holding plane 33f of the second guide tab 33 and the third holding plane 35f pf the third guide tab 35 when the device plate 23 has been inserted into the insertion space S1. And then the device plate 23 is set in the predetermined set position because the movement of the device plate 23 in the direction MD1 beyond the predetermined set position is restrained by the third guide tab 35. In addition, the movement in the direction MD2 of the device plate 23 had been set in the predetermined set position is restrained by the stopper 37.

In this manner, the transponder 19 is mounted on the circumferential surface of the inner liner 17 in a state where the first edge 23a, the second edge 23b and the third edge 23c of the device plate 23 is tucked by sets of the first holding plane 31f of the first guide tab 31 and the surface of the holder plate 29, the second holding plane 33f of the second guide tab 33 and the surface of the holder plate 29, and the third holding plane 35f of the third guide tab 35 and the surface of the holder plate 29. Therefore, rattling of the transponder 19 due to various input forces during spinning of the pneumatic tire 1 can be restrained sufficiently without strengthening contact pressures exerted between the first holding plane 31f of the first guide tab 31 and the first edge 23a of the device plate 23, and between the second holding plane 33f of the second guide tab 33 and the second edge 23b of the device plate 23. In particular, since each of the first guide tab 31 and the second guide tab 33 extends in the tire lateral direction W, rattling of the transponder 19, especially due to input forces at stop-spinning (speed-reducing) and start-spinning (speed-accelerating) of the pneumatic tire 1 among the various input forces, can be restrained sufficiently.

On the other hand, the restraint mode is switched to the release mode by elastically deforming the stopper 37 in case where the transponder 19 is to be repaired, exchanged and so on. And then the device plate 23 is slid in the direction MD2.

In this manner, the device plate 23 is detached from the insertion space S1, thereby the transponder 19 is unmounted from the circumferential surface of the inner liner 17.

As explained above, according to the first embodiment, rattling of the transponder 19 due to various input forces during spinning of the pneumatic tire 1 can be restrained sufficiently without strengthening contact pressures exerted between the first holding plane 31f of the first guide tab 31 and the first edge 23a of the device plate 23, and between the second holding plane 33f of the second guide tab 33 and the second edge 23b of the device plate 23. Therefore, the transponder 19 can be stably-mounted over the long term without difficulty. And the transponder 19 can be removed from the circumferential surface of the inner liner 17 without difficulty, thereby working efficiency at repairing or exchanging the transponder 19 can be improved.

### (Second Embodiment)

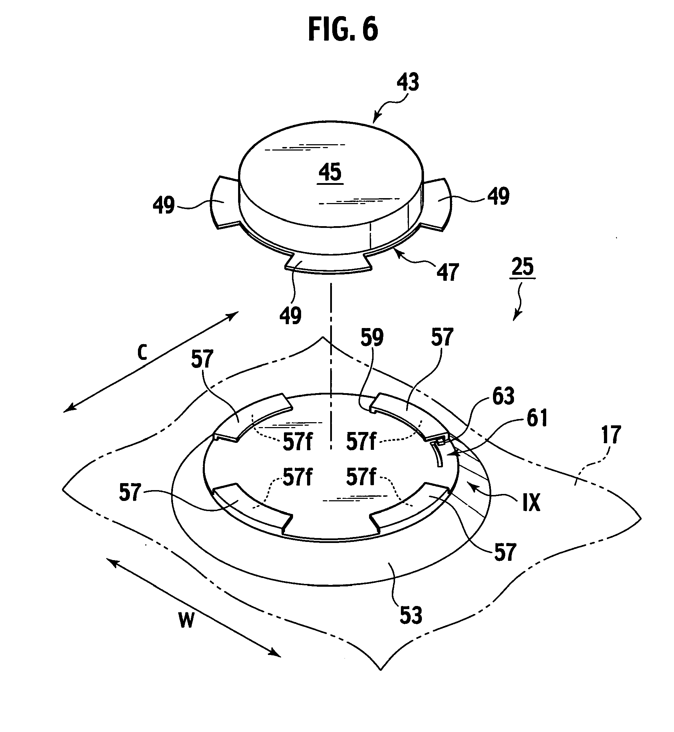

A second embodiment according to the present invention will be explained with reference to Figs. 6 to 11.

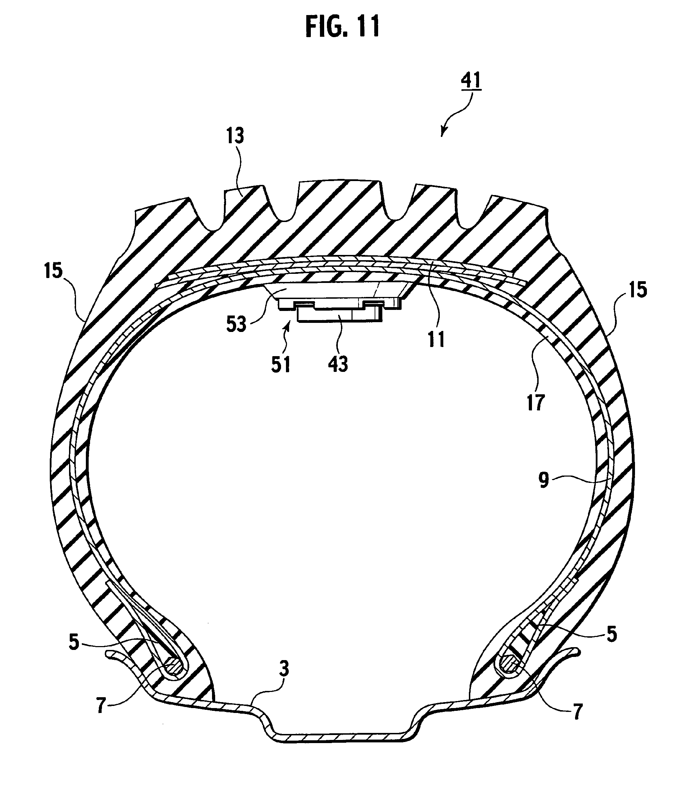

As shown in Fig. 11, a pneumatic tire 41 in the second embodiment has a pair of bead fillers 5, bead cores 7, a carcass 9, a multiply belt 11, a tread 13, side walls 15 and an inner liner 17, similarly to the first embodiment. Note that, among plural components of the pneumatic tire 41 in the second embodiment, components correspondent to those of the pneumatic tire 1 in the first embodiment are allocated with the identical numbers in the drawings to omit their explanations.

As shown in Fig. 6, a transponder 43 is mounted on an inner circumferential surface of the inner liner 17. The transponder 43 includes a box-shaped electronic device main body 45 that incorporates various electronic components (not shown). In addition, a circular device plate 47 is provided at a bottom of the electronic device main body 45, which is composed of light alloy metal such as aluminum. Four arch-shaped flanges 49 projected outward are integrally formed along a circumferential edge of the device plate 47 at even intervals. Note that, in the present embodiment, the device plate 49 is provided at the bottom of the transponder 43 as one component of the transponder 43, however a device plate may be provided at the bottom of the transponder 43 as one separated component.

Next, a mounting structure 51 for mounting the transponder 43 on the circumferential surface of the inner liner 17 will be explained.

As shown in Figs. 6 to 8, a rubber base 53 is adhered on the circumferential surface of the inner liner 17. A holder plate 55 is adhered on a surface of the rubber base 53. In other words, the holder plate 55 is indirectly-fixed on the circumferential surface of the inner liner 17 via the rubber base 53. Specifically, at vulcanizing a raw tire (a tire which has not yet completed as the pneumatic tire 41), the rubber base 53 is vulcanization-adhered on the circumferential surface of the inner liner 17 and a back surface of the holder plate 55 is vulcanization-adhered on the surface of the rubber base 53. Note that the holder plate 55 may be directly-fixed on the circumferential surface of the inner liner 17 instead of being indirectly-fixed on the circumferential surface of the inner liner 17 via the rubber base 53.

The holder plate 55 has four guide tabs 57 each of which is composed of light alloy metal such as aluminum and integrally formed by bending processes along a circumferential direction at even intervals. Each of the guide tabs 57 has a holding plane 57f on its inward side for tucking a corresponding flange 49 in combination with the surface of the holder plate 55. The circumferential edge of the device plate 55 is held slidably in prescribed rotational directions RD1 and RD2 (extending directions of the guide tabs 57) by the holding planes 57f (and the surface of the holder plate 55). The rotational directions RD1 and RD2 are opposite each other. In addition, two guide tabs 57 opposing in the tire circumferential direction C extend in the tire lateral direction W. Other two guide tabs 57 opposing in the tire lateral direction W extend in the tire circumferential direction C. Note that each of the guide tabs 57 may be formed by grinding processes with a monoblock material or by being integrally welded onto the holder plate 55 instead of being integrally formed by bending work of the holder plate 55.

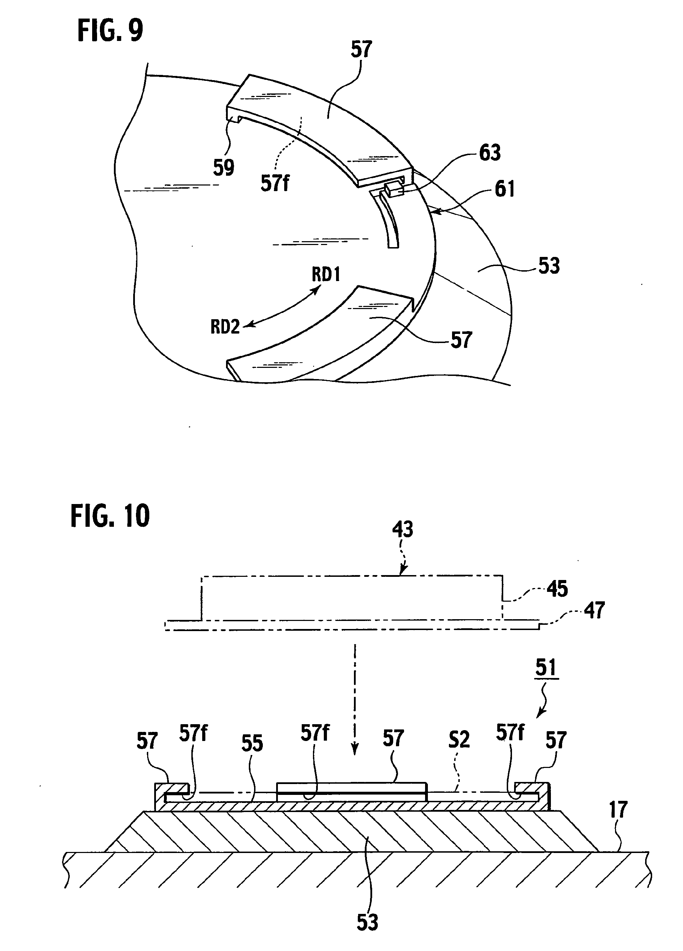

And, as shown in Fig. 10, an insertion space S2 is sectioned by the surface of the holder plate 55 and the four holding planes 57f of the guide tabs 57. The device plate 47 can be inserted into the insertion space S2 from a direction perpendicular to the surface of the holder plate 55 (from above in Fig. 6).

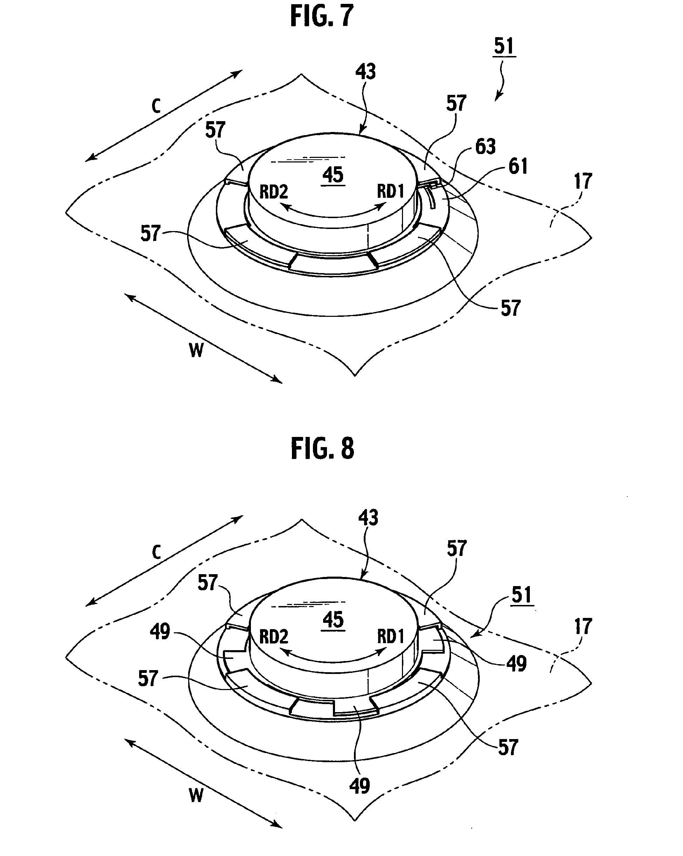

As shown in Fig. 9, a wall (a first rotation restraint means) 59 is integrally formed with at least one of the guide tabs 57 in order to restrict an rotation of the device plate 47 being inserted within the insertion space S2 beyond a predetermined set position (a position of the device plate 47 shown in Fig. 7) in the rotational direction RD1. Note that the wall 59 may be integrally formed on the holder plate 55 instead of being integrally formed with the guide tab 57. In addition, the number of the walls 59 can be increased and the walls 59 can be provided for all of the guide tabs 57.

On the other hand, an arch-shaped stopper (a snap tab: a second rotation restraint means) 61 is integrally formed on the holder plate 55 by slitting works in order to restrict a rotation of the device plate 23 had been set in the predetermined set position toward the rotational direction RD2. The stopper 61 has a pawl 63 capable of contacting with the flange 49 of the device plate 47. In addition, the stopper 61 can transform its state between a restraint mode and a release mode. The restraint mode is a mode in which the rotation of the device plate 47 in the rotational direction RD2 is restrained by projecting the pawl 63 from the surface of the holder plate 55 by an elastic deformation of the stopper 61. The release mode is a mode in which the restraint mode is cancelled by retracting the pawl 63 beneath the surface of the holder plate 55. Further, it is preferable that the stopper 61 impels the flange 49 toward the wall 59 by its elastic force. In other words, the stopper 61 is provided for at least the guide tab 57 having the wall 59. Note that the stopper 61 may be integrally formed on the device plate 47 instead of being integrally formed on the holder plate 55. The number of the stoppers 61 can be increased arbitrarily and the stoppers 61 can be provided for all of the guide tabs 57.

Next, workings and advantages of the second embodiment will be explained.

The device plate 47 is inserted into the insertion space S2 from above. At this time, the guide tabs 57 and the flanges 49 are aligned not to be overlapped each other and then an upper plane of the holder plate 55 and a lower plane of the device plate 47 are contacted. The pawl 63 is pushed by the device plate 47, thereby the stopper 61 is forced into the release state. Subsequently, the device plate 47 is rotated in the rotational direction RD1 and then the rotation of the device plate 47 in the rotational direction MD1 beyond the predetermined set position is restrained due to contacting with the wall 59, thereby the device plate 47 is set in the predetermined set position. In addition, the rotation in the rotational direction RD2 of the device plate 47 had been set in the predetermined set position is restrained by the stopper 61.

In this manner, the transponder 43 is mounted on the circumferential surface of the inner liner 17 in a state where each of the flanges 49 is tucked by each of the holding planes 57f of the guide tabs 57 and the surface of the holder plate 55. Therefore, rattling of the transponder 43 due to various input forces during spinning of the pneumatic tire 41 can be restrained sufficiently without strengthening contact pressures exerted between the holding planes 57f of the guide tabs 57 and the flanges 49 of the device plate 47. In particular, since the two guide tabs 57 opposing in the tire circumferential direction C extend in the tire lateral direction W, rattling of the transponder 43 due to input forces at stop-spinning (speed-reducing) and start-spinning (speed-accelerating) of the pneumatic tire 1 can be restrained sufficiently.

On the other hand, the restraint mode is switched to the release mode by elastically deforming the stopper 61 in case where the transponder 43 is to be repaired, exchanged and so on. Subsequently, the device plate 47 is rotated in the rotational direction RD2, thereby held states of the flanges 49 by the holding planes 57f of the guide tabs 57 are released. And then the device plate 47 is removed upward from the holder plate 55.

In this manner, the device plate 47 is detached from the insertion space S2, thereby the transponder 43 is unmounted from the circumferential surface of the inner liner 17.

As explained above, according to the second embodiment, rattling of the transponder 43 due to various input forces during spinning of the pneumatic tire 41 can be restrained sufficiently without strengthening contact pressures exerted between the holding planes 57f of the guide tabs 57 and the flanges 49 of the device plate 47. Therefore, the transponder 43 can be stably-mounted over the long term without difficulty. And the transponder 43 can be removed from the circumferential surface of the inner liner 17 without difficulty, thereby working efficiency at repairing or exchanging the transponder 43 can be improved.

Note that the present inventions can be carried out in various embodiments other than the above-mentioned embodiments. In addition, the range encompassed in the present inventions is not limited to these above-mentioned embodiments.

A drum test in respect to the embodiments according to the present embodiment will be explained briefly. A transponder according to each of the first and second embodiments is mounted on a circumferential surface of an inner liner of a 205/55R16 sized tire for a passenger car, respectively. Next, the tire for a passenger car is assembled on a 6.5-inch width rim and is filled with 290Kpa air in its inside, respectively. Further, the tire for a passenger car is spun by a 1.7m-diameter drum which is rotated at 240km/h for 60 min. under being pushed onto an outer circumferential surface of the drum, respectively. And then, it is confirmed that a mounting state of the transponder is still stable after the drum test, respectively.

### INDUSTRIAL APPLICABILITY

According to the present invention, rattling of the electronic device due to various input forces during spinning of the pneumatic tire can be restrained sufficiently without strengthening the contact pressures exerted between the first holding plane of the first guide tab and the first edge of the device plate, and between the second holding plane of the second guide tab and the second edge of the device plate. Therefore, the electronic device can be stably-mounted over the long term without difficulty. And the electronic device can be removed from the inner liner without difficulty, thereby working efficiency at repairing or exchanging the electronic device can be improved.

In addition, according to the present invention, rattling of the electronic device due to various input forces during spinning of the pneumatic tire can be restrained sufficiently without strengthening the contact pressures exerted between the holding planes of the guide tabs and the flanges of the device plate. Therefore, the electronic device can be stably-mounted over the long term without difficulty. And the electronic device can be removed from the inner liner without difficulty, thereby working efficiency at repairing or exchanging the electronic device can be improved.

## Claims

1. A mounting structure of an electronic device, in which the electronic device provided with a device plate composed of a rigid material at the bottom thereof is mounted on an inner liner of a pneumatic tire, comprising:
a holder plate which is composed of a rigid material and fixed on a surface of the inner liner directly or indirectly;
a first guide tab which is integrally provided with the device plate and has a first holding plane on an inward side thereof for tucking a first edge of the device plate in combination with a surface of the holder plate to hold the first edge slidably in a prescribed direction and in an opposed direction to prescribed direction; and
a second guide tab which is integrally provided with the device plate and has a second holding plane on an inward side thereof for tucking a second edge of the device plate, which is parallel to the first edge of the device plate, in combination with the surface of the holder plate to hold the second edge slidably in the prescribed direction and in the opposed direction,
wherein
an insertion space into which the device plate is inserted is sectioned by the surface of the holder plate, the first holding plane and the second holding plane, and
the structure further comprises
a first movement restraint means for restricting a movement of the device plate being inserted within the insertion space beyond a predetermined set position toward the prescribed direction and
a second movement restraint means which can be transformed between a restraint mode for restricting a movement of the device plate had been set in the predetermined set position toward the opposed direction and a release mode for releasing the restraint mode.

2. The mounting structure of an electronic device according to claim 1, wherein
the first movement restraint means is integrally formed on the holder plate as a third guide tab having a third holding plane on an inward side thereof for tucking a third edge of the device plate perpendicular to the first edge of the device plate.

3. The mounting structure of an electronic device according to claim 1 or 2, wherein
the second movement restraint means is integrally formed on the holder plate or the device plate as a stopper capable of being transformed by an elastic deformation thereof between the restraint mode and the release mode.

4. The mounting structure of an electronic device according to any one of claims 1 to 3, wherein
the first and second guide tabs extend a tire lateral direction, respectively.

5. A mounting structure of an electronic device, in which the electronic device provided with a device plate composed of a rigid material at the bottom thereof is mounted on an inner liner of a pneumatic tire, comprising:
a holder plate which is composed of a rigid material and fixed on a surface of the inner liner directly or indirectly; and
guide tabs each of which is integrally provided along a circumference direction of the device plate at intervals and has a holding plane on an inward side thereof for tucking one of arch-shaped flanges projecting outward from a circumference of the device plate in combination with a surface of the holder plate,
wherein
an insertion space into which the device plate is inserted is sectioned by the surface of the holder plate and the holding planes, and
the structure further comprises
a first rotation restraint means for restricting a rotation of the device plate being inserted within the insertion space beyond a predetermined set position toward a prescribed rotational direction and
a second rotation restraint means which can be transformed between a restraint mode for restricting a rotation of the device plate had been set in the predetermined set position toward an opposed direction to the rotational direction and a release mode for releasing the restraint mode.

6. The mounting structure of an electronic device according to claim 5, wherein the first movement restraint means is integrally formed on the holder plate as a wall contacting with one of the flanges when the device plate inserted within the insertion space is rotated in the rotational direction.

7. The mounting structure of an electronic device according to claim 5 or 6, wherein
the second movement restraint means is integrally formed on the holder plate or the device plate as a stopper capable of being transformed by an elastic deformation thereof between the restraint mode and the release mode.

8. The mounting structure of an electronic device according to any one of claims 5 to 7, wherein
two of the guide tabs extend a tire lateral direction opposingly.

9. The mounting structure of an electronic device according to any one of claims 1 to 8, further comprises a rubber base adhered on the surface of the inner liner,
wherein the holder plate is adhered on a surface of the rubber base.

10. The mounting structure of an electronic device according to claim 9, wherein, at vulcanizing a raw tire,
the rubber base is vulcanization-adhered on the surface of the inner liner, and
a back surface of the holder plate is vulcanization-adhered on the surface of the rubber base.

11. The mounting structure of an electronic device according to any one of claims 1 to 10, wherewin the rigid material is light alloy metal.

12. A pneumatic tire comprising the mounting structure of an electronic device according to any one of claims 1 to 11.
